# EUROPEAN PATENT APPLICATION

(11) **EP 2 063 681 A1**
(43) Date of publication of application: **27.05.2009**
(21) Application number: 07121187.4
(22) Date of filing: 21.11.2007
(51) Int. Cl.: H04W 88/02

(54) **Device management system**

(71) Applicant: Nokia Siemens Networks Oy, 02610 Espoo (FI)
(72) Inventor: Teittinen, Veli-Matti, 02760, Espoo (FI)
(74) Representative: Smolander, Jouni Juhani

(57) **Abstract**

The invention relates to a method for arranging device management for a mobile device in a mobile communications system. Location related information on the mobile device is defined by the mobile communications system. At least one device management parameter is specified on the basis of the location of the mobile device. A device management action is performed on the mobile device on the basis of the specified device management parameters.

## Description

### FIELD

The invention relates to device management systems, more specifically to arranging device management for a mobile device.

### BACKGROUND

As different data processing devices, such as mobile stations, become more complex, the significance of device management becomes more pronounced. Devices require several different settings, such as settings related to Internet access points, and setting them manually by the user is arduous and difficult. When a new service is available or when a user is adopting a new mobile phone, for instance, a need arises to provision a service for the user's device. Device management technologies are available for such provisioning.

Device management technologies have been developed so that a telecom operator, for instance, may set an appropriate configuration for a device. Device management generally refers to actions by which a person typically not using a device may change the configuration of the device; for instance change the settings used by the device. One of standardized device management technologies is OMA (Open Mobile Alliance) Device Management, which is partly based on the SyncML (Synchronization Markup Language) protocol.

Despite the development of device management technologies, in some circumstances a user of the device may still be prompted to enter information for a device management event, such as provisioning a new service. The user does not necessarily know all the required information or it requires some extra effort to obtain such information. A need exists to further develop device management systems so that the efforts required from the user may be minimized.

### BRIEF DESCRIPTION

A method, apparatus, and computer program product are now provided which are characterized by what is stated in the independent claims. Some embodiments of the invention are described in the dependent claims.

According to an aspect of the invention, location of a mobile device for which a need for device management exists is defined by the mobile communications system. At least one device management parameter is specified on the basis of the location of the mobile device. A device management action is performed for the mobile device on the basis of the specified at least one device management parameter.

The term "device management" is to be understood broadly to cover any kind of configuration of a parameter or resource in a managed device, for instance to provision a new service or modify an existing service for the managed device. The term "device management parameter" is to be understood broadly to cover any factor influencing the device management action for the mobile device. For instance, the device management parameter may be a setting which is transmitted to the managed device during device management, or the device management parameter may represent a certain device management resource, such as a device management server, which is thus selected on the basis of the location of the mobile device.

The invention and various embodiments of the invention provide several advantages, which will become apparent from the detailed description below. One advantage is that the device management process may be adapted in accordance with the location of the mobile device defined by the system. Thus, it is not necessary to request information to determine the network environment serving the mobile device, for instance, from a user of the mobile device.

### LIST OF DRAWINGS

The invention is now described in greater detail by means of some embodiments and with reference to the attached drawings, in which
Figure 1 illustrates a communications system facilitating device management for mobile devices;
Figure 2 illustrates an apparatus according to an embodiment of the invention;
Figure 3 illustrates a method according to an embodiment of the invention;
Figures 4a, 4b, and 4c illustrate methods according to embodiments of the invention; and
Figure 5 illustrates a signalling procedure in accordance with an OMA DM protocol.

### DETAILED DESCRIPTION OF THE INVENTION

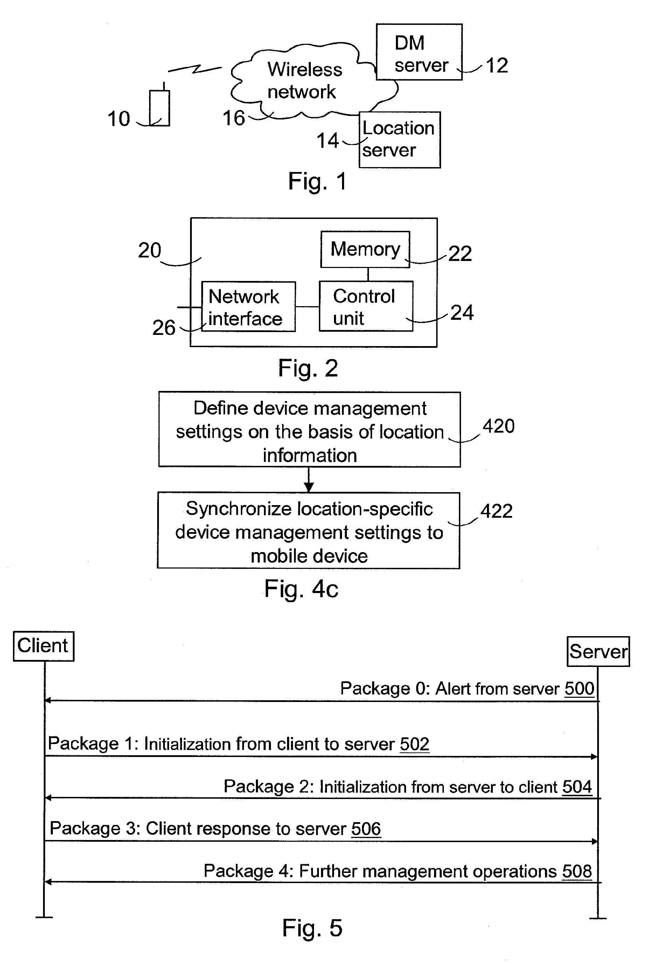

A general architecture of a communication system providing device management for mobile devices is illustrated in Figure 1. In the following, different embodiments will be described using this system as an example of system architecture whereto the embodiments may be applied, without restricting any embodiment to such an architecture, however.

The system comprises a device management server 12 adapted to manage a mobile device 10 via a mobile network 16, for instance to provision a service for the mobile device 10. The mobile device 10 could be a mobile station, a laptop computer, or a PDA (Personal Digital Assistant), for instance.

A device management system for device management services for the mobile device(s) comprises at least the server 12, but may comprise further elements or nodes not illustrated in Figure 1. In one embodiment, the mobile device 10 is adapted to function as a device management client and the server 12 as a device management (DM) manager or server. The server 12 may manage several mobile devices 10. As illustrated in Figure 1, the system may additionally comprise an apparatus for providing a location information system maintaining location information on mobile devices, such as a location server supporting OMA Mobile Location Protocol (MLP).

The mobile network 16 may be any network providing wireless services, for instance a network supporting GSM services, a network supporting GPRS (General Packet Radio Service) services, a third-generation mobile network, such as a network according to the network specifications of 3GPP (3^{rd} Generation Partnership Project), a non-cellular network, such as a wireless local area network WLAN, WiMAX or an ultra-wideband (UWB) network, a private network, or a combination of several networks. Lower-layer transport techniques may be circuit- or packet-switched in accordance with the properties of the underlying mobile network 16. Other networks, such as Internet Protocol (IP) based network(s), may also be provided between the mobile network 16 and the server 12. In addition to the illustrated configuration example, many other device management configurations may also be envisaged, such as a management connection between devices 10 or a direct management connection between the device 10 and the server 12.

Figure 1 is a simplified system architecture only showing some elements and functional entities, all being logical units whose implementation may differ from what is shown. It is apparent to a person skilled in the art that the systems also comprise other functions and structures. As already indicated, the underlying functions, structures, elements and protocols used for communicating device management related information between the device management system and the mobile device 10 may be arranged in many ways. Therefore, they need not be discussed in more detail here.

Apparatuses, such as servers, or corresponding server components, user terminals and/or other corresponding devices or apparatuses implementing the functionality of a corresponding apparatus described with an embodiment comprise not only prior art means, but also means for defining location information. In addition, they may comprise means for applying location information for customizing device management parameters. More precisely, they comprise means for implementing a functionality of a corresponding apparatus described with an embodiment and they may comprise separate means for each separate function, or means may be configured to perform two or more functions.

Figure 2 is a block diagram of an apparatus 20 according to an embodiment. The apparatus 20 may be the DM server 12 of Figure 1 managing the mobile device 10, for instance. Although the apparatus 20 has been depicted as one entity, different modules and memory may be implemented in one or more physical or logical entities. The apparatus 20 is adapted to control device management for a mobile device and, in particular, to customize device management parameters on the basis of the location of the mobile device. For this purpose, the apparatus comprises a data storage 22 for storing device management data and location data at least temporarily, at least one control unit 24 for providing a control system controlling device management, a network interface 26 for sending and receiving various inputs, information and messages. The control unit 24 is adapted to control device management and be responsive to received device management requests and location information.

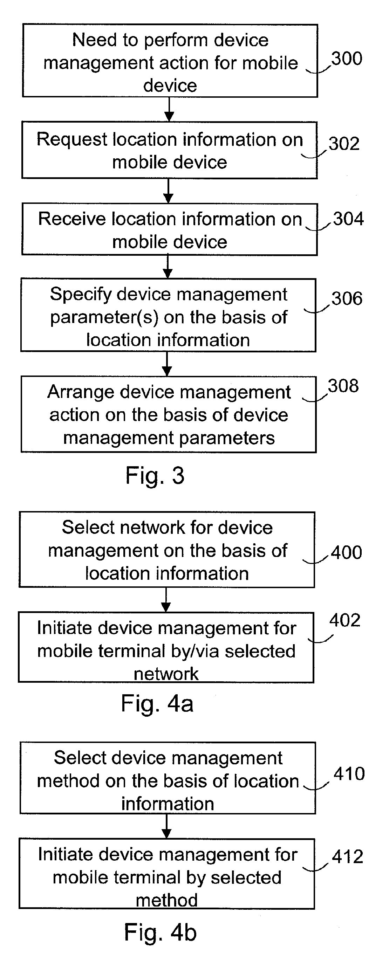

The functionality of the control unit 24 is described in more detail below in connection with Figures 3 to 5. It should be appreciated that the apparatus may comprise other units used in or for device management. However, they are not relevant to the actual invention and, therefore, they need not be discussed in more detail here.

Present apparatuses comprise processors and memory that may be utilized in an embodiment. Computer program codes executed in the processing unit may be used for causing the apparatus 10, 12, 14, 20 to implement a control system and means for providing the above-illustrated entities, some embodiments of the inventive functions also being illustrated below in association with Figures 3, 4a, 4b, and 5. For example, the control unit 24 may be adapted to provide, by executing computer program code in a processor, a software application controlling the device management. The apparatus 20 adapted to function as a device management server may execute a device management adaptation algorithm for which one or more inputs related to the location of the mobile device are provided and which adapts properties of the device management on the basis of the processing of the inputs.

Such programs, also called program products, including software routines, applets and macros, may be stored in any apparatus-readable data storage medium and they include program instructions to perform particular tasks. All modifications and configurations required for implementing the functionality of an embodiment may be performed as routines, which may be implemented as added or updated software routines. Further, software routines may be downloaded into an apparatus. The programs may also be loaded through a network by using a TCP/IP protocol stack, for instance. The apparatus, such as a server, or a corresponding server component, may be configured as a computer or a microprocessor, such as a single-chip computer element, including at least a memory for providing storage area used for arithmetic operation and an operation processor for executing the arithmetic operation. An example of the operation processor includes a central processing unit. The memory may be removable memory detachably connected to the apparatus.

Hardware solutions or a combination of hardware and software solutions may also be used to implement the inventive functions. For instance, application circuits (ASIC) and/or programmable circuits may be applied. A chip unit or some other kind of hardware unit or module for controlling a communications apparatus may, in one embodiment, cause the apparatus to perform these functions.

Figure 3 illustrates a method according to an embodiment of the invention. In step 300 the method starts in response to a need to perform device management on a mobile device, such as the mobile device 10 of Figure 1. For instance, the mobile device may have entered a new network area, a new service is to be provisioned for the mobile device, or the mobile device is being configured for use for the first time. The device management may be initiated or triggered by a user of the mobile device or the device management system as a part of another process. An example is that a user (indirectly) triggers registering to a new service and retrieval of settings for the service in response to selecting an icon linked to the service resource. Another example is that the device management is forced by enterprise administration to update security settings. Thus, the actions required from the user to trigger device management may be minimized or even avoided.

In steps 302 and 304, the location of the mobile device is defined in the mobile communications system. In the embodiment of Figure 3, location information is requested 302 from the mobile device or a location storage unit in the system, and in step 304 the location information is received.

In step 306, at least one device management parameter is specified on the basis of the location of the mobile device. In step 308, a device management action is performed on the mobile device on the basis of the device management parameter(s) defined on the basis of the location information on the mobile device. For instance, a location-specific set of device management parameters may thus be transmitted to the mobile device 10 by a device management protocol. Some other and further embodiments are illustrated below.

By applying the location information defined by the system to adapt device management, a device management process can be made more automatic and less complex from the point of view of the user.

The system may comprise a location definition unit for detecting and/or defining the location of the mobile device 10. Such a unit may reside in the mobile device 10, the device management server 12, and/or some other network element and may receive a request 302 and return the location information for step 304. Many available methods exist for determining location information on the mobile device 10, and the application of the present invention is not limited to any particular method. Some further embodiments are illustrated below.

In one embodiment, a positioning technology is used. A satellite-based positioning system may be applied where the mobile device 10 is equipped with a positioning unit receiving signals from satellites and a calculating position. Examples of such positioning systems include Global Positioning System (GPS), Glonass and Galileo.

In another embodiment, a network-based positioning system is applied. Cell-identification based position detection or a system calculating signal propagation delay are examples of such network-based positioning systems. In another embodiment, information indicating the location area of the mobile device 10 is obtained or derived on the basis of the current operation environment of the mobile device.

According to an embodiment, location information is requested from the mobile device 10. The location information is defined by the mobile device 10 and transmitted to the device management system, such as the server 12, specifying the set of device management parameters. A location information query may be implemented by a device management technology, such as by OMA DM and SyncML based solution. For instance, a request-response type of query may be used. The device management system may trigger a session establishment for the mobile device, for instance by using the OMA DM protocol. Typically, device information (such as model and firmware) is first queried after connection establishment. The device management system may request the mobile device to report its location or perform radio measurements. The requested information may be already stored in the memory of the mobile device, whereby the mobile device may retrieve the information from the memory and send it to the device management system. Location information may be requested parallel to a synchronization process in order to customize device management parameters.

According to an embodiment, the location information is defined on the basis of radio measurements made by the mobile device 10. The mobile device 10 may perform radio measurements to detect base stations or access points within the area, signal strengths, and/or movement, for instance, and report back results to the device management system or a location information apparatus serving the device management system. The measurements may be carried out in response to a request from the device management system or the location information apparatus, or some other trigger, such as by predetermined time intervals.

Since the mobile device 10 may perform radio measurements periodically, it may already have stored required measurement information. In such a case, it only needs to report this information to the system. The mobile device may need to perform more measurements, and only after that may it send measurements.

According to an embodiment, movement information is defined on the mobile device 10. For instance, speed and direction information may be defined. A set of device management parameters is specified on the basis of the movement information. This information may be requested by and submitted to the location information or device management system together with the location information. The system may then calculate the mobile device's position and speed by a known method or it may ask for some other service for the location and movement information on the mobile device. Both location and movement information or measurements for determining this information may be obtained on the basis of mobile based or network based methods. It may be difficult or even impossible to obtain precise movement information, but an estimate may usually be defined. By this embodiment, the mobility of the mobile device may be taken into account when defining an appropriate network for the mobile device for transferring the device management information to the mobile device, for instance.

According to an embodiment, the location related information is requested from a location information storage/detection node in the mobile network 16 or another network. The device management apparatus 20 may access a location service to obtain location indicia corresponding with the location of the mobile device and use the location indicia to specify the device management parameter(s). For instance, with reference to Figure 1, the device management server 12 may request location information on the mobile device 10 from the location information system 14. One available protocol for communicating location information is the OMA Mobile Location Protocol (MLP).

In one embodiment, uncertainty (reliability) of location and/or movement is defined and used as an input when adjusting the device management parameters. An estimate value(s) may be given to the uncertainty of position and/or movement. For example, if location is based on a GSM cell identity method, the uncertainty of the location may vary substantially (from hundred meters to kilometres). Knowing that for example a WLAN access point coverage is roughly a couple of meters (in open space), it would be difficult to say whether or not a device actually resides under the WLAN coverage. Uncertainty estimates may be obtained directly from the positioning system, such as GPS or Galileo based system. In another embodiment the uncertainty estimates are determined on the basis of measurements, such as cell coverage, signal strengths and time difference measurements.

Various methods may be applied to produce information on the current location of the mobile terminal, movement of the mobile terminal, and uncertainty of location and/or movement. This information may then be used for adjusting device management parameters, for instance as inputs to the device management adaptation algorithm. Use of location information is discussed in the embodiments below, but also movement and/or uncertainty information may be applied. However, also other inputs may be used for adapting device management to the mobile device.

The location information may be used in the device management system for various purposes, as will be illustrated by some embodiments below. In particular, the location information may be used for identifying the surrounding environment of the mobile device 10 to adapt device management accordingly.

According to an embodiment, network environment information is defined for the mobile device on the basis of the location of the mobile device.

The location information may be used for determining the network environment in a specific area. Now, since the mobile device's position is known, a service provider may find out operating networks around the mobile device. The device management system may utilize network maps including information on access networks technologies and operators in a certain area. The network environment information may be defined and collected in various ways, in accordance with the capabilities and properties of the underlying system infrastructure. For example, measurement units included in the system (in a network element and/or the mobile devices) report what they can hear and measure or a service provider tells which networks are available in its serving area. An example of such a procedure is that a wireless local area network (WLAN) base station collects information on other base stations and even further network elements in the area, for instance by applying the IEEE 802.21 interoperability procedures. In one embodiment, a mapping position in a network map may be positioned on the basis of the location information by the location server 14, for instance. On the basis of the mapping position, it is possible to define the surrounding environment and available networks.

According to an embodiment, a network to manage the mobile device is selected on the basis of the location of the mobile device. As illustrated in Figure 4a, in step 400 a network is selected on the basis of location information on the mobile device for a device management procedure. In step 402, device management for the mobile device is initiated by/via the selected network. Hence, a network appropriate for the device management and/or serving the mobile device 10 may be selected in step 402. The steps of Figure 4a may be carried out in steps 306 and 308 of Figure 3.

For instance, if a service (application) only works in a certain network, such as a private network, the system may, in step 402, order the mobile device to attach to a serving network and register to the service. In another embodiment, the location related information, such as the movement or speed of the mobile device and/or reliability of the information, is used for excluding short-range wireless networks when the mobile device will be soon moving out of the range, or the mobile device is moving faster than a predetermined limit. This embodiment enables the need for frequent handovers to be reduced.

According to an embodiment, a set of device management parameters is specified for the mobile device on the basis of the network environment information specified on the basis of the location information of the mobile device. For instance, the device management may be concentrated for a single device management system, such as a corporate device management managing a corporate's mobile devices regardless of their current access network. Thus, the device management system may specify the device management parameters suitable for the current access network and/or service provision environment of the mobile device 10 after receiving the location information. In another example, the device management system directly specifies appropriate device management settings to be synchronized in the mobile device on the basis of the location information.

According to an embodiment, the location information is used for verifying a time zone. In another embodiment, the location information is used to determine a place, such as a city, for setting area specific instructions.

As illustrated in Figure 4b, in one embodiment, the location information is used to select 410 a device management method to perform the rest of the device management process. In step 412, device management is initiated for the mobile device by the selected device management method. For instance, the device management system may apply predefined network-specific information for selecting an appropriate device management method. Thus, the device management system may ensure that the device management method and/or the underlying transport procedure is appropriate for a network currently serving the mobile device.

As illustrated in Figure 4c, in one embodiment, device management settings are specified in step 420 (which may be performed in step 306 of Figure 3) on the basis of the location information of the mobile device, as a location-specific set of device management parameters. The set of location-specific device management parameters is then transmitted in step 422 (308) to the mobile device 10 by a device management protocol.

A use case example of utilizing location information in device management and service provision is provided below. A Short Message Service (SMS) is one mechanism to provide a user and a mobile device with service settings. Usually, a service provider sends settings by a binary short message. Unfortunately, this transport option is not always reliable because some networks may block binary short messages. This means that the user will never receive the message, and it is frustrating for the user to wait for the settings message which will never come. Knowing the user's location, operators and/or networks nearby, the present device management method may exclude transport methods that will not work. Hence, network-specific property information may be stored or requested by the device management system, and properties of the device management session and/or the underlying bearer service(s) may be adopted accordingly.

Another example is that the (device management system) service provider has more than one device management entity around the world. In one embodiment, after the location of the mobile device is known, a control unit executing a device management procedure for the service provider may determine which one of the available device management servers is the most suitable and favourable for the device management operation in view of the location information. The service provider device management procedure, which may also function as a device management server, may decide to route the device management process to another device management server. For example, if the user is in India and a provisioning operation needs to be executed, a device management server in the US, that is a default server for this user, is assigned to perform the provisioning operation. However, on the basis of a review of available servers, the server in the US may route or forward a request to a device management server in India to perform the provisioning for the user.

Thus, most appropriate device management entities may be selected on the basis of the location of the mobile device to perform the device management action for the mobile device, and possibly also locally required/preferable methods or parameters may thus be provided for the mobile device. Therefore, it is further possible to enhance availability of local services for visiting (roaming) mobile subscribers.

According to an embodiment, OMA Device Management (DM) technology is applied for device management related communications to the mobile device 10. Hence, the device management server 12 may function as an OMA DM server and the mobile device 10 as an OMA DM client. The OMA DM may be applied to various environments: For instance, the wireless network 16 of Figure 1 could be a 3GPP mobile network or a WiMAX based network system. 3GPP IP Multimedia Subsystem (IMS) client configuration is an example of further specified mechanisms applying OMA DM.

Figure 5 illustrates a signalling procedure in accordance with the OMA DM protocol. OMA DM Protocol consists of two parts: a setup phase (authentication and device information exchange) and a management phase. Management sessions may start with Package 0 500 (alert from the server), by which the OMA DM server may trigger device management. The setup phase also comprises Packages 1 502 (client initialization with client credentials and device information) and 2 504 (server initialization with server credentials, initial management operations or user interaction commands from the server). Thus, the DM client, in response to an internal trigger or an external trigger, such as a triggering message from the DM server, transmits information concerning itself in a session initiation message to the DM server. The DM server then replies by transmitting its own information and possibly server management commands.

The Management Phase consists of a number of protocol iterations, illustrated in Figure 5 by packages 3 506 and 4 508. The contents of the package sent from the server to the client determine whether or not the session is to be continued. If the server sends management operations in a package that need responses (Status or Results) from the client, the management phase of the protocol continues with a new package from client to server containing the client's responses to those management operations. The response package from the client starts a new protocol iteration.

In one embodiment, the location information is delivered between the mobile device and the device management system by utilizing OMA DM. In transmission of the DM commands between the DM server and a client, at least some of the features of the OMA specifications may be utilized; for a more detailed description of the OMA device management protocol and other commands, for instance, reference is made to the OMA specification "OMA Device Management Protocol", approved version 1.2, 09 February 2007, 53 pages (OMA-TS-DM_protocol-V1_2-20070209-A), and the OMA specification "OMA Device Management Representation Protocol", version 1.2, 09 February 2007, 43 pages (OMA-TS-DM_RepPro-V1_2-20070209-A). For instance, message elements specified in chapter 6 of the latter specification may be utilized.

According to an embodiment for the OMA DM system, location information for the mobile device is included in Package 1. In a further embodiment, the location information is included in a device information portion of Package 1, such as the DevInfo management object specified in the OMA DM specification "OMA Device Management Standardized objects", approved version 1.2, 09 February 2007, 29 pages (OMA-TS-DM_StdObj-V1_2-20070209-A. The location information may be included in the element Data associated with a specific node in a management tree. For instance, a new node may be added to the DevInfo management object for the location information. The mobile device may be arranged to form and transmit Package 1 comprising a replace command addressed to such a location information node and including the current location information on the mobile device.

However, the location information could be transferred in another OMA DM protocol message, for instance in Package 3 506, or a new message could be specified for the transmission. The DM client may be arranged to store the location information in the DM management tree as part of an existing or new object, on a periodical basis or in response to a request. Further, a specific OMA DM request element may be provided for the DM server to request (arrange retrieval of) the location information from (an addressed management node maintained by) the DM client. For instance, the DM server could be arranged to use the Package 0 500 or Package 2 504 to request the location information from the DM client.

The application of the present invention is not limited to any specific device management technique. Instead of or in addition to the above-illustrated embodiments applying OMA DM, it is possible to apply one or more of the above illustrated embodiments by another proprietary or standardized device management techniques. One example of such a technique is a wireless device configuration protocol specified by the IETF (Internet Engineering Task Force) in RFC 2604, or its derivatives.

In one embodiment, the location of the mobile device is used for adapting service provisioning, i.e. operation of a service provisioning system, for instance the server 12, is adapted on the basis of the location information. The mobile device may have requested a service and a service provider will arrange the actual provision of the service by the provisioning system on the basis of the location information of the mobile device. The service provisioning parameter(s) may be specified on the basis of the location of the mobile device, and above-illustrated features may be applied for arranging service provisioning. The service provisioning may be arranged on the basis of any device management method, such as the OMA DM.

An exemplary use case below illustrates one way of utilizing the present features. A user steps in to a museum. She has opened an Internet connection over a GPRS network. She requests the museum's guidance application from the museum's web pages. She accepts the terms, allows the system to install the application and waits for the system to complete the process. A device management (DM) system associated with the museum's system establishes a DM connection to the mobile device and starts synchronization. At the same time the DM system requests location information from the mobile device. The mobile device performs measurements and reports them to the DM system. The DM system calculates the position of the mobile device and observers that the mobile device is actually inside the museum. Since the guidance application is a small piece of software, it is downloaded through the existing cellular connection. The museum has a private WLAN network to guarantee that customers inside the building have all the network capacity in use. At this point the user has the application but not yet access to the private network.

The DM system downloads profile data (including security and authentication parameters, for instance) to the mobile device and thus enables access to the private network. At the end of the process, the DM system orders the mobile device to attach to the private network. At the same time the DM system performs some verification and testing of success. This is possible since the mobile device now resides in the private network. After the provision is completed, the service is ready to be used.

If the user leaves the museum premises, this can be detected (lost connection to the private network or the system calculates the user's position). Then the DM system may order the mobile device to remove the application and the profile. The application and the profile may have a validity period to guarantee that the service and network capacity is not used against the policy. After the validity period has expired, the application and profile no longer work.

It should be noted that the embodiments described above could also be applied in any combination thereof. It is apparent to a person skilled in the art that as technology advances, the basic idea of the invention can be implemented in many different ways. The invention and its embodiments are thus not restricted to the examples described above but may vary within the scope of the claims.

## Claims

1. A method for arranging device management for a mobile device in a mobile communications system, the method comprising:
performing a device management action on the mobile device on the basis of a set of device management parameters,
**characterized by**
defining (302; 304) location of the mobile device by the mobile communications system, and
specifying (306) at least one of the device management parameters on the basis of the location of the mobile device.

2. The method according to claim 1, further comprising:
defining network environment information on the mobile device on the basis of the location of the mobile device, and
specifying the at least one device management parameter for the mobile device on the basis of the network environment information.

3. The method according to claim 1 or 2, further comprising:
selecting (400; 410) a network and/or a device management method to provision the mobile device on the basis of the location of the mobile device.

4. The method according to any preceding claim, wherein location information is requested (302) from the mobile device,
the location information is defined by the mobile device,
the location information is transmitted to a device management server specifying the at least one device management parameter.

5. The method according to any preceding claim, wherein the location information is defined on the basis of radio measurements made by the mobile device.

6. An apparatus for a device management system, the apparatus comprising:
a network interface (26), and
a control system (24) associated with the network interface (26) and adapted to perform a device management action on the mobile device on the basis of a set of device management parameters, **characterized in that** the control system (24) is adapted to: define (302) location of a mobile device, and
specify (306) at least one of the device management parameters on the basis of the location of the mobile device.

7. An apparatus according to claim 6, wherein the at least one device management parameter is device management information, and
the apparatus is adapted to transmit the at least one device management parameter to the mobile device by a device management protocol.

8. An apparatus according to claim 6 or 7, wherein the apparatus is adapted to define network environment information on the mobile device on the basis of the location of the mobile device, and
the apparatus is adapted to specify the at least one device management parameter for the mobile device on the basis of the network environment information.

9. An apparatus according to any one of claims 6 to 8, wherein the apparatus is adapted to select (400; 410) a network and/or a device management method to manage the mobile device on the basis of the location of the mobile device.

10. An apparatus according to any one of claims 6 to 9, wherein the apparatus is adapted to generate (304) a message for requesting the location information on the mobile device, and
the apparatus is adapted to define (306) the location of the mobile device on the basis of location information included in a response message.

11. An apparatus according to any one of claims 6 to 10, wherein the apparatus is adapted to access a location service to obtain location indicia corresponding with the location of the mobile device and use the location indicia to specify the at least one device management parameter.

12. An apparatus according to any one of claims 6 to 11, wherein the apparatus is further adapted to define movement information on the device, and
the apparatus is adapted to specify the at least one device management parameter on the basis of the movement information.

13. An apparatus according to any one of claims 6 to 12, wherein the apparatus is adapted to specify the at least one device management parameter on the basis of reliability information on the location information and/or movement information of the mobile device.

14. An apparatus according to any one of claims 6 to 13, wherein the apparatus is a provisioning server for provisioning a service for the mobile device.

15. An apparatus according to any one of claims 6 to 14, wherein the apparatus is adapted to function as a device management server communicating with a device management client in the mobile device.

16. A computer program for an apparatus controlling device management and stored on a storage medium, **characterized by** the computer program comprising computer program code for causing the apparatus to perform steps as claimed in any of claims 1 to 5.
